# FASCICULE DE BREVET EUROPEEN

(11) **EP 2 722 516 B1**
(45) Date de publication et mention de la délivrance du brevet: **24.12.2014**
(21) Numéro de dépôt: 13306411.3
(22) Date de dépôt: 15.10.2013
(51) Int. Cl.: F02M 35/10, F02B 29/04, F02M 25/07, F28F 9/00

(54) **Répartiteur intégrant un échangeur de chaleur et son procédé de fabrication**
Ansaugkrümmer mit integriertem Wärmetauscher und Verfahren zu seiner Herstellung
Intake manifold with integrated heat exchanger and its method of manufacturing

(30) Priorité: 19.10.2012 FR 1259972
(43) Date de publication de la demande: 23.04.2014
(73) Titulaire: Systèmes Moteurs (Société par Actions Simplifiée), 92300 Levallois-Perret (FR)
(72) Inventeur: Ancel, Benoît, 68420 Eguisheim (FR); Becker, Nicolas, 68000 Colmar (FR)
(74) Mandataire: Nuss, Laurent

(56) Documents cités:
- EP-A1- 1 048 839
- EP-A2- 0 343 565
- EP-A2- 1 296 108
- FR-A1- 2 886 390
- FR-A1- 2 946 397

## Description

La présente invention concerne le domaine des équipements techniques des véhicules automobiles à moteur à combustion interne, plus particulièrement les éléments et composants formant la ligne d'admission des gaz comburants de ces moteurs.

L'invention a, dans ce contexte, pour objet un collecteur d'admission intégrant un échangeur de chaleur.

De très nombreuses réalisations de collecteurs d'admission sont connues dans l'état de la technique. Il en est de même pour les échangeurs de chaleur, en particulier ceux destinés à refroidir les gaz EGR avant leur mélange avec l'air frais, en vue de l'injection du mélange gazeux résultant dans les cylindres.

Une demande constante, voire une contrainte constructive permanente, dans le domaine de la fabrication automobile, est le gain de place en particulier sous le capot et dans l'environnement du moteur.

Dans le cadre de cette problématique générale, une tendance forte vise l'intégration de plusieurs fonctions complémentaires, associées et/ou consécutives dans un même module ou une même unité structurel(le).

Ainsi, il a été proposé de combiner les fonctions "collecteur d'admission" et "échangeur de chaleur" dans un même module et différentes solutions de réalisation de ce type de module unitaire et multifonctionnel ont déjà été divulguées.

Dans l'état de la technique sont notamment connus des collecteurs d'admission pour moteur à combustion interne intégrant au moins un échangeur de chaleur monté dans le volume intérieur dudit collecteur.

Il en résulte que ledit volume intérieur est séparé en deux compartiments situés de part et d'autre dudit échangeur, et que le flux de gaz circulant dans le collecteur traverse ledit échangeur pour passer d'un premier desdits compartiments vers le second compartiment.

Deux problèmes majeurs se posent dans ce type de construction composite (module combiné : répartiteur + échangeur intégré), à savoir, le maintien rigide de l'échangeur dans le corps du répartiteur et la préservation de l'étanchéité aux gaz du corps du répartiteur.

Un problème annexe peut provenir de la nécessité d'étanchéifier l'interface périphérique entre l'échangeur et le corps du répartiteur, afin de forcer le flux gazeux à traverser l'échangeur et ainsi optimiser l'action de ce dernier.

Conformément à un premier mode de réalisation connu de collecteurs d'admission formant modules combinés, par exemple illustrés par les documents US 2011/0088663 et WO 2011/061311, l'échangeur intégré est réalisé in situ en coopération avec le corps du collecteur, certaines parties servant simultanément à l'échangeur et au collecteur.

Dans ce premier type de réalisation, les parties fonctionnelles de l'échangeur sont assemblées avec les parois du collecteur en réalisant une double étanchéité, à savoir l'étanchéité de l'échangeur lui-même et l'étanchéité de ce dernier vis-à-vis du collecteur.

Il en résulte une complexité de construction et des contraintes de fabrication et de montage très élevées, résultant en coût de revient important.

Selon un second mode de réalisation connu, l'échangeur de chaleur est réalisé séparément puis monté dans le corps du répartiteur lorsque ce dernier est déjà en grande partie assemblé (cf. WO 2008/061850, DE 10 2007 030 464, WO 2009/027492 ou FR 2 645 209) ou en étant intégré en cours d'assemblage des différentes parties du répartiteur (cf. FR 2 936 572, WO 2011/064087 ou FR 2 908 833). Dans ce second type de réalisations connu, le maintien en position de l'échangeur est réalisé par blocage dans le corps du répartiteur ou par solidarisation avec la paroi de ce dernier, l'étanchéité du répartiteur étant gérée de manière indépendante.

Il en résulte la nécessité d'une concordance des formes de l'échangeur et du collecteur et/ou de la prévision de sites particuliers d'ancrage de l'échangeur, ainsi que des moyens de fixation spécifiques.

De plus, plusieurs opérations d'assemblage/de montage consécutives sont nécessaires.

Par le document EP 0 343 565, on connaît un répartiteur ou collecteur d'admission pour moteur à combustion interne, en particulier suralimenté, ledit répartiteur intégrant au moins un échangeur de chaleur monté dans le volume intérieur dudit répartiteur en étant solidarisé à la paroi du corps du collecteur par au moins une bride latérale. Le corps du répartiteur est formé de deux parties creuses constitutives assemblées entre elles de manière étanche au niveau de bords périphériques en regard et de configuration mutuellement correspondante, avec interposition de la bride de l'échangeur.

Dans ce répartiteur connu, le montage de l'échangeur et l'assemblage étanche des parties constitutives du corps du répartiteur sont obtenus par une unique combinaison de moyens, par une unique opération d'assemblage et par l'utilisation d'une unique zone d'interfaçage entre l'échangeur et le corps du collecteur.

Toutefois, cette dernière solution met encore en oeuvre une pluralité de parties, notamment deux joints d'étanchéité, et une pluralité de moyens de fixation (vis). En outre, le procédé d'assemblage est relativement fastidieux à mettre en oeuvre.

Enfin, le document FR 2 946 397 A1 divulgue un répartiteur d'admission avec un échangeur de chaleur intégré. Les deux parties creuses constitutives du corps du répartiteur sont assemblées de manière étanche suivant une zone de contact continue périphérique et reliées mécaniquement par solidarisation.

La présente invention a essentiellement pour but de proposer une solution plus simple et mettant en oeuvre moins de parties et de pièces que celle divulguée par EP 0 343 565.

A cet effet, l'invention propose un répartiteur du type décrit précédemment, **caractérisé en ce que** ses deux parties constitutives sont assemblées par liaisonnement matériel, préférentiellement soudure des bords d'assemblage en regard, lesdits bords étant, d'une part, reliés matériellement entre eux de manière étanche (directement ou indirectement) suivant une zone de contact continue périphérique, entourant le pourtour externe de ladite bride, et, d'autre part, reliés mécaniquement à ladite bride par engagement ou solidarisation au niveau d'ouvertures traversantes et/ou de zones d'accrochage ou de liaisonnement de cette dernière.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
Les figures 1 et 2 sont respectivement des représentations schématiques, en coupe, d'un répartiteur avec échangeur selon un mode de réalisation de l'invention, respectivement vu en élévation latérale (figure 1) et de dessus (figure 2) ; illustrant deux variantes d'assemblage des parties constitutives du répartiteur et de l'échangeur,
La figure 2A est une vue de détail à une échelle différente de la zone d'assemblage du répartiteur avec échangeur illustré figure 2 ;
La figure 3 est une vue selon la direction DE de l'échangeur seul, monté en étant intégré structurellement dans le répartiteur représenté figures 1 et 2, et,
La figure 4 est une vue de détail à une échelle différente illustrant un autre mode de réalisation de l'invention, en particulier une variante supplémentaire de l'assemblage des parties constitutives du répartiteur et de l'échangeur.

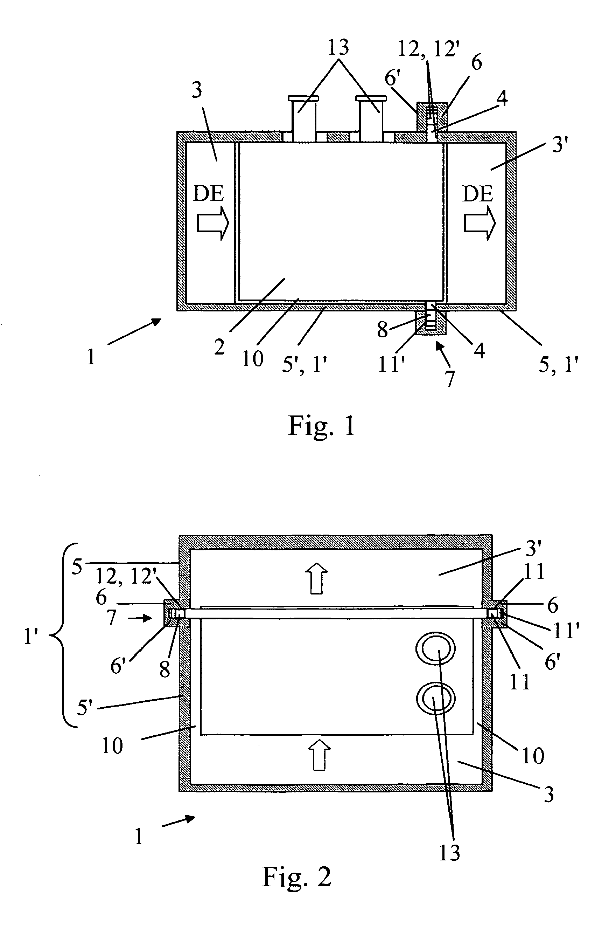

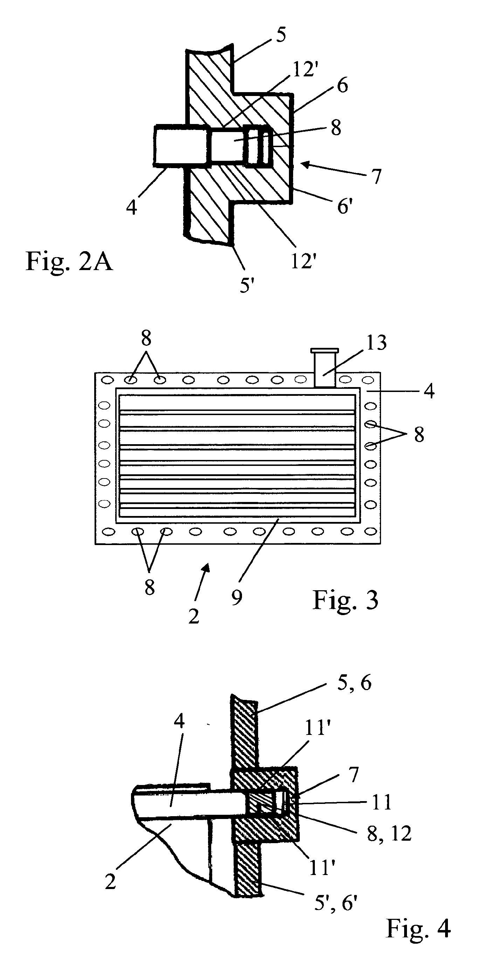

Les figures 1 et 2 montrent un répartiteur ou collecteur d'admission 1 pour moteur à combustion interne, en particulier suralimenté, ledit répartiteur 1 intégrant au moins un échangeur de chaleur 2 monté dans le volume intérieur dudit répartiteur 1 en étant solidarisé à la paroi du corps 1' du répartiteur par au moins une bride latérale 4. Le corps 1' du répartiteur est formé d'au moins deux parties creuses constitutives 5, 5' assemblées entre elles de manière étanche au niveau de bords périphériques 6, 6' en regard et de configuration mutuellement correspondante, avec interposition de la bride 4 de l'échangeur 2.

Conformément à l'invention, les deux parties constitutives 5 et 5' sont assemblées par soudure desdits bords 6 et 6' en regard, lesdits bords 6, 6' étant, d'une part, reliés matériellement entre eux (directement ou indirectement) de manière étanche suivant une zone de contact 7 continue périphérique (de forme annulaire), entourant le pourtour externe de ladite bride 4, et, d'autre part, reliés mécaniquement à ladite bride 4 par engagement ou solidarisation par accrochage matériel au niveau d'ouvertures traversantes 8 et/ou de zones déformées ou en décrochement de cette dernière, ou encore de zones ou de faces d'accrochage ou de liaisonnement.

L'assemblage étanche des parties 5, 5' du corps 1' du répartiteur 1 et le montage rigide de l'échangeur 2 dans ce dernier sont ainsi réalisés sans mettre en oeuvre de pièce additionnelle d'étanchéité ou de fixation, et en concentrant les opérations techniques sur une seule zone du module combiné (répartiteur 1 + échangeur 2). En outre, les deux opérations précitées peuvent être réalisées simultanément en une unique phase opératoire.

La liaison matérielle entre les deux bords 6 et 6' peut consister en une liaison par soudure directe, par exemple par vibrations ou miroir.

Dans ce cas, et comme le montrent les figures 2 et 2A, le matériau des bords 6 et 6' eux-mêmes peut, à lui seul, former la zone de contact 7, c'est-à-dire envelopper totalement la bride 4 et venir en engagement traversant ou d'accrochage au niveau des ouvertures 8 ou de zones d'accrochage équivalentes (par exemple crevées, projections, ailes, chicanes, rebords ou analogues formés/ménagés dans le bord 4), avec une solidarisation répartie et localisée par sites.

Comme le montre la figure 1 en variante, les bords 6 et 6' peuvent aussi venir en engagement au niveau des ouvertures 8 de la bride 4 et être éventuellement reliés matériellement entre eux à travers elles (le matériau des bords 6, 6' fusionnant et se répandant dans ces ouvertures 8 lors de l'assemblage par soudure par vibration par exemple).

Pour garantir l'étanchéité de l'assemblage des deux parties 5 et 5', recouvrir le bord externe saillant de la bride 4 et fournir une liaison matérielle indirecte (le cas échéant supplémentaire) entre les bords 6 et 6', il peut être prévu de réaliser un surmoulage enveloppant extérieurement ladite bride 4 et formant la zone 7 de contact et de pontage entre les deux parties 5 et 5'.

Enfin, selon une autre variante de réalisation ressortant de la figure 4, il peut être prévu que la bride 4 comporte un surmoulage thermoplastique avant son assemblage avec le corps 1' du répartiteur 1. Le matériau surmoulé est alors solidarisé (de manière étanche, par soudure) aux bords 6 et 6' lors de l'assemblage des parties constitutives 5 et 5' et forme la zone de contact 7 entre ses bords 6 et 6', qui sont alors reliés indirectement entre eux.

La solidarisation intime entre la bride 4 et les bords 6, 6' des parties 5, 5' s'opère ainsi par encapsulage partiel ou total de la bride 4 entre les bords 6, 6', mais également par engagement du matériau thermoplastique de ces bords 6, 6' dans les ouvertures 8 (accrochage par des ergots ou des doigts de matériau 12' ou par des ponts de matière 12 traversants, suite à la fusion partielle desdits bords 6, 6' avec interposition de la bride 4).

De manière avantageuse et comme le montre la figure 3, la ou chaque bride 4 est une bride périphérique entourante s'étendant sur tout le pourtour latéral de l'échangeur 2, les ouvertures traversantes 8 étant préférentiellement réparties sur toute la bride 4.

Ainsi, la ou chaque bride périphérique 4 entourante peut constituer un cadre support et/ou de renfort structurel pour l'échangeur 2 et simultanément un insert de rigidification pour le corps 1' du répartiteur 1, auquel il est intimement relié, par imbrication et engagements mécaniques multiples.

Dans la pratique, la ou les bride(s) 4 consiste(nt) préférentiellement chacune en une aile en tôle métallique rapportée sur ou formée d'un seul tenant avec une enveloppe 9 externe de l'échangeur de chaleur 2, ladite aile 4 étant avantageusement située à proximité de l'une des extrémités, dans la direction d'écoulement DE du flux gazeux, de l'échangeur 2.

Bien entendu, à la différence du mode de réalisation représenté aux figures annexées, plusieurs brides 4 espacées le long de l'échangeur 2 peuvent être prévues, par exemple une bride entourante 4 comme représentée figures 1 à 3 et une ou plusieurs brides 4 sous forme de pattes ou de languettes situées à l'autre extrémité de l'échangeur 2 et venant en appui contre la paroi de la partie 5' ou fixée à cette dernière avant assemblage des deux parties 5 et 5' (non représenté).

La bride 4 peut, en outre, lorsqu'elle est prévue sous forme de cadre périphérique entourant, réalisée une fonction secondaire de canalisation du flux gazeux à travers l'échangeur 4 en empêchant les fuites de contournement (à travers les éventuels espaces libres ou interstices entre le corps de l'échangeur 2 et les parois du corps 1' du collecteur 1).

Dans ce cas et comme le montrent les figures 1 et 2, la bride périphérique 4 est reliée de manière étanche à l'enveloppe externe 9 de l'échangeur 2 qui délimite, dans la direction d'écoulement DE normal du flux gazeux, une portion de passage latéralement étanche dans le répartiteur 1, l'interstice 10 entre cette enveloppe 9 et la paroi du corps 1' du répartiteur 1 étant obturée par ladite bride périphérique 4 dont les ouvertures traversantes 8 sont toutes situées entre les bords 6, 6' assemblés par soudure.

Lorsque la bride 4 ne remplit pas cette fonction d'étanchéité interne, il peut être prévu de mettre en oeuvre des moyens spécifiques d'étanchéité, distincts de la bride 4, par exemple du type de ceux décrits dans la demande de brevet français n° 12 59928 du 18 octobre 2012 au nom de la demanderesse.

En accord avec une variante de réalisation pratique ressortant des figures 1 et 2, les deux parties constitutives 5, 5' forment entièrement le corps 1' du répartiteur 1 et sont réalisées en un matériau thermoplastique, ces parties 5, 5' étant assemblées par soudure par échauffement et fusion locales de la matière des bords 6, 6' en regard, par exemple par soudure par vibrations (le matériau thermoplastique peut, par exemple, être du polyamide ou du polypropylène, éventuellement chargé en fibres ou autre).

Afin d'aboutir à un meilleur calage et à une meilleure imbrication de la bride 4 dans le corps 1' du répartiteur 1, chaque bord peut être pourvu d'un décrochement 11 formant, par coopération avec le décrochement du bord 6, 6' en regard, au moins une ébauche de gorge de réception 11' pour la bride 4 en forme de plaque.

En variante, un unique décrochement 11 peut être prévu au niveau de l'un des deux bords 6, 6' seulement.

Alternativement, la soudure peut également être réalisée par apport de matière, par exemple par surmoulage.

En tout état de cause, l'invention vise également à obtenir une imbrication physique entre les bords 6, 6' et la bride 4 par engagement de matière d'au moins un, préférentiellement des deux bords 6 et 6' dans les ouvertures 8 de la bride 4.

A cet effet, l'un au moins des, préférentiellement les deux, bords 6 et 6' peut (peuvent) présenter des ergots destinés à venir s'engager dans les ouvertures 8 (ces ergots peuvent éventuellement contribuer à un prémontage de l'échangeur 2 sur l'une des parties 6, 6' avant assemblage de celles-ci).

En variante, un surplus de matière peut être prévu au niveau des bords 6, 6', ledit surplus formant lors de la fusion de la matière, au moment de l'assemblage par soudure, des projections venant en engagement dans les orifices 8.

Lorsque le surplus de matière précité est présent en quantité suffisante, les deux bords 6, 6' mutuellement en contact peuvent également être reliés directement entre eux par des ponts de matière 12 s'étendant à travers au moins certaines des ouvertures traversantes 8 présentes dans la bride 4. Ainsi, la résistance de l'assemblage peut être fortement augmentée ainsi que celle de la liaison entre la bride 4 et le corps 1'.

Comme déjà indiqué précédemment, la zone de contact 7, qui entoure et recouvre extérieurement la bride 4, peut soit être produite par le matériau des bords 6 et 6', soit consister en un surmoulage de la bride 4, avec un matériau compatible avec celui des parties 5, 5' constitutives du corps 1' du collecteur.

L'invention a également pour objet un procédé de fabrication d'un collecteur ou répartiteur 1 intégrant au moins un échangeur de chaleur 2 tel que décrit précédemment.

Ce procédé est **caractérisé en ce qu'il** consiste à fournir, d'une part, deux parties constitutives 5 et 5' d'un corps 1' de collecteur ou de répartiteur 1 pourvues de bords d'assemblage périphériques 6 et 6' de configurations symétriques complémentaires et, d'autre part, un échangeur de chaleur 2 comportant au moins une bride latérale 4 et présentant une forme et des dimensions adaptées pour un montage dans une partie du volume délimité par les deux parties 5 et 5' à l'état assemblé, à disposer lesdites parties constitutives 5 et 5' et ledit échangeur 2 dans un gabarit ou moule de soudure de telle manière que la ou les bride(s) 4 soi(en)t disposée(s) entre les bords d'assemblage 6 et 6' en regard desdites parties 5 et 5', à réaliser ensuite l'opération de soudure de telle manière que lesdits bords 6, 6' soient, d'une part, reliés matériellement entre eux de manière étanche suivant une zone de contact 7 en forme de bande continue périphérique, entourant le pourtour externe de ladite bride 4, et, d'autre part, reliés mécaniquement, de manière localisée et discontinue, à ladite bride 4 par engagement au niveau d'ouvertures traversantes 8 et/ou de zones déformées ou en décrochement de cette dernière et, enfin, à extraire la pièce composite formant répartiteur 1 ou partie de répartiteur, et éventuellement à la soumettre à au moins une opération de fabrication ou de finition additionnelle.

L'échangeur 2 peut avantageusement être prémonté dans l'une 5' des parties 5 et 5' du corps 1 par exemple celle comportant les orifices pour le passage des embouts de raccordement 13 de l'échangeur 2. Les dispositifs d'étanchéité particuliers peuvent éventuellement être prévus au niveau des orifices.

Le volume intérieur du corps creux 1' du répartiteur 1 présente, après réalisation du module combiné, trois régions distinctes, à savoir une région centrale occupée par l'échangeur 2 et deux régions périphériques 3 et 3' vides localisées respectivement dans les deux parties constitutives 5 et 5', séparées par l'échangeur 2 et servant à la circulation du fluide gazeux.

Avantageusement, l'opération de soudure est une opération de soudure par vibrations, les deux parties constitutives 5, 5' étant réalisées en un matériau thermoplastique et chaque bord d'assemblage 6, 6' étant préférentiellement pourvu d'un décrochement 11 formant, par coopération avec le décrochement du bord 6, 6' en regard, au moins une ébauche de gorge de réception 11' pour la bride 4 en forme de plaque.

Préférentiellement, le procédé consiste à fournir un échangeur 2 avec une enveloppe externe étanche 9 et une bride périphérique entourante 4 sous la forme d'une aile formée d'un seul tenant ou rapportés sur ladite enveloppe 9, et reliée à cette dernière de manière étanche.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Répartiteur ou collecteur d'admission pour moteur à combustion interne, en particulier suralimenté, ledit répartiteur intégrant au moins un échangeur de chaleur monté dans le volume intérieur dudit répartiteur en étant solidarisé à la paroi du corps du répartiteur par au moins une bride latérale, le corps du répartiteur étant formé d'au moins deux parties creuses constitutives assemblées entre elles de manière étanche au niveau de bords périphériques en regard et de configuration mutuellement correspondante, avec interposition de la bride de l'échangeur, répartiteur (1) **caractérisé en ce que** ses deux parties constitutives (5 et 5') sont assemblées par liaisonnement matériel, préférentiellement soudure, desdits bords (6 et 6') en regard, lesdits bords (6, 6') étant, d'une part, reliés matériellement entre eux, directement ou indirectement, de manière étanche suivant une zone de contact (7) continue périphérique, entourant le pourtour externe de ladite bride (4), et, d'autre part, reliés mécaniquement, à ladite bride (4) par engagement ou solidarisation au niveau d'ouvertures traversantes (8) et/ou de zones d'accrochage ou de liaisonnement de cette dernière.

2. Répartiteur ou collecteur selon la revendication 1, **caractérisé en ce que** la ou chaque bride (4) est une bride périphérique entourante s'étendant sur tout le pourtour latéral de l'échangeur (2), les ouvertures traversantes (8) étant préférentiellement réparties sur toute la bride (4).

3. Répartiteur ou collecteur selon l'une quelconque des revendications 1 et 2, **caractérisé en ce que** la ou les brides (4) consiste(nt) chacune en une aile en tôle métallique rapportée sur ou formée d'un seul tenant avec une enveloppe (9) externe de l'échangeur de chaleur (2), ladite aile (4) étant avantageusement située à proximité de l'une des extrémités, dans la direction d'écoulement (DE) du flux gazeux, de l'échangeur (2).

4. Répartiteur selon les revendications 2 et 3, **caractérisé en ce que** la bride périphérique (4) est reliée de manière étanche à l'enveloppe externe (9) de l'échangeur (2) qui délimite, dans la direction d'écoulement (DE) normal du flux gazeux, une portion de passage latéralement étanche dans le répartiteur (1), l'interstice (10) entre cette enveloppe (9) et la paroi du corps (1') du répartiteur (1) étant obturée par ladite bride périphérique (4) dont les ouvertures traversantes (8) sont toutes situées entre les bords (6, 6') assemblés par soudure.

5. Répartiteur selon l'une quelconque des revendications 1 à 4, **caractérisé en ce que** les deux parties constitutives (5, 5') forment entièrement le corps (1') du répartiteur (1) et sont réalisées en un matériau thermoplastique, ces parties (5, 5') étant assemblées par soudure par échauffement et fusion locales de la matière des bords (6, 6') en regard, par exemple par soudure par vibrations, avec formation de la zone de contact (7), et
**en ce que** chaque bord (6, 6') est pourvu d'un décrochement (11) formant, par coopération avec le décrochement du bord (6, 6') en regard, au moins une ébauche de gorge de réception (11') pour la bride (4) en forme de plaque.

6. Répartiteur selon l'une quelconque des revendications 1 à 5, **caractérisé en ce que** la zone de contact (7) consiste en un surmoulage de la bride (4), avec un matériau compatible avec celui des parties (5, 5') constitutives du corps (1') du collecteur.

7. Répartiteur selon l'une quelconque des revendications 1 à 6, **caractérisé en ce que** les deux bords (6, 6') mutuellement en contact sont également reliés directement entre eux par des ponts de matière (12) s'étendant à travers au moins certaines des ouvertures traversantes (8) présentes dans la bride (4).

8. Procédé de fabrication d'un collecteur ou répartiteur intégrant au moins un échangeur de chaleur selon l'une quelconque des revendications 1 à 7, **caractérisé en ce qu'il** consiste à fournir, d'une part, deux parties constitutives (5 et 5') d'un corps (1') de collecteur ou de répartiteur (1) pourvues de bords d'assemblage périphériques (6 et 6') de configurations symétriques complémentaires et, d'autre part, un échangeur de chaleur (2) comportant au moins une bride latérale (4) et présentant une forme et des dimensions adaptées pour un montage dans une partie du volume délimité par les deux parties (5 et 5') à l'état assemblé, à disposer lesdites parties constitutives (5 et 5') et ledit échangeur (2) dans un gabarit ou moule de soudure de telle manière que la ou les bride(s) (4) soi(en)t disposée(s) entre les bords d'assemblage (6 et 6') en regard desdites parties (5 et 5'), à réaliser ensuite l'opération de soudure de telle manière que lesdits bords (6, 6') soient, d'une part, reliés matériellement entre eux de manière étanche suivant une zone de contact (7) en forme de bande continue périphérique, entourant le pourtour externe de ladite bride (4), et, d'autre part, reliés mécaniquement, de manière localisée et discontinue, à ladite bride (4) par engagement au niveau d'ouvertures traversantes (8) et/ou de zones déformées ou en décrochement de cette dernière et, enfin, à extraire la pièce composite formant répartiteur (1) ou partie de répartiteur, et éventuellement à la soumettre à au moins une opération de fabrication ou de finition additionnelle.

9. Procédé de fabrication selon la revendication 8, **caractérisé en ce que** l'opération de soudure est une opération de soudure par vibrations, les deux parties constitutives (5, 5') étant réalisées en un matériau thermoplastique et chaque bord d'assemblage (6, 6') étant préférentiellement pourvu d'un décrochement (11) formant, par coopération avec le décrochement du bord (6, 6') en regard, au moins une ébauche de gorge de réception (11') pour la bride (4) en forme de plaque.

10. Procédé de fabrication selon l'une quelconque des revendications 8 et 9, **caractérisé en ce qu'**il consiste à fournir un échangeur (2) avec une enveloppe externe étanche (9) et une bride périphérique entourante (4) sous la forme d'une aile formée d'un seul tenant ou rapportés sur ladite enveloppe (9), et reliée à cette dernière de manière étanche.

## Patentansprüche

1. Verteiler oder Ansaugkrümmer für Verbrennungsmotor, insbesondere aufgeladenen Verbrennungsmotor, wobei der genannte Ansaugkrümmer mindestens einen Wärmetauscher umfasst, der im Innenraum des genannten Ansaugkrümmers montiert ist, indem er mit mindestens einem seitlichen Flansch an der Wand des Ansaugkrümmerkörpers befestigt ist, wobei der Körper des Ansaugkrümmers aus mindestens zwei hohlen Bestandteilen aufgebaut ist, die im Bereich einander zugewandter Umfangsränder einander entsprechender Form unter Einfügen des Wärmetauscherflansches dicht zusammengesetzt sind, Ansaugkrümmer (1), **dadurch gekennzeichnet, dass** seine beiden Bestandteile (5 und 5') durch Materialschluss, vorzugsweise Schweißen, der genannten, einander zugewandten Ränder (6 und 6') zusammengesetzt sind, wobei die genannten Ränder (6, 6') einerseits direkt oder indirekt in einer ununterbrochenen, peripheren Berührungszone (7), die den Außenumfang des genannten Flansches (4) umgibt, durch Materialschluss miteinander verbunden sind, und andererseits mechanisch mit dem genannten Flansch (4) durch Einsetzen oder Befestigung im Bereich durchgehender Öffnungen (8) und/oder Einhak- oder Verbindungszonen des letztgenannten verbunden sind.

2. Verteiler oder Ansaugkrümmer nach Patentanspruch 1, **dadurch gekennzeichnet, dass** der oder jeder Flansch (4) ein peripher umgreifender Flansch ist, der sich über den gesamten seitlichen Umfang des Wärmetauschers (2) erstreckt, wobei die durchgehenden Öffnungen (8) vorzugsweise über den gesamten Flansch (4) verteilt sind.

3. Verteiler oder Ansaugkrümmer nach irgendeinem der Patentansprüche 1 und 2, **dadurch gekennzeichnet, dass** der oder die Flansch(e) (4) jeweils aus einem Flügel aus Blech besteht/ehen, der auf einem Außenmantel (9) des Wärmetauschers (2) angesetzt oder einstückig mit ihm geformt ist, wobei der genannte Flügel (4) vorteilhafterweise nahe einem der Enden in der Strömungsrichtung (DE) der Gasströmung des Wärmetauschers (2) angeordnet ist.

4. Ansaugkrümmer nach den Patentansprüchen 2 und 3, **dadurch gekennzeichnet, dass** der periphere Flansch (4) dicht mit dem Außenmantel (9) des Wärmetauschers (2) verbunden ist, der in der normalen Strömungsrichtung (DE) der Gasströmung einen seitlich dichten Durchtrittsbereich im Ansaugkrümmer (1) begrenzt, wobei der Zwischenraum (10) zwischen diesem Mantel (9) und der Wand des Körpers (1') des Ansaugkrümmers (1) durch den genannten peripheren Flansch (4) geschlossen wird, dessen durchgehende Öffnungen (8) sich alle zwischen den durch Schweißen zusammengesetzten Rändern (6, 6') befinden.

5. Ansaugkrümmer nach irgendeinem der Patentansprüche 1 bis 4, **dadurch gekennzeichnet, dass** die beiden Bestandteile (5, 5') den ganzen Körper (1') des Ansaugkrümmers (1) bilden und aus einem thermoplastischen Werkstoff bestehen, wobei diese Teile (5, 5') durch Schweißen unter lokalem Erhitzen und Schmelzen des Werkstoffes der einander gegenüber liegenden Ränder (6, 6'), beispielsweise durch Vibrationsschweißen, unter Ausbildung der Berührungszone (7) zusammengesetzt sind, und
dadurch, dass jeder Rand (6, 6') mit einem Absatz (11) versehen ist, der durch Zusammenwirken mit dem Absatz des gegenüber liegenden Randes (6, 6') mindestens eine Ausgangsform einer Aufnahmekehle (11') für den plattenförmigen Flansch (4) bildet.

6. Ansaugkrümmer nach irgendeinem der Patentansprüche 1 bis 5, **dadurch gekennzeichnet, dass** die Berührungszone (7) aus einer Umspritzung des Flansches (4) mit einem Werkstoff besteht, der mit dem der Bestandteile (5, 5') des Körpers (1') des Ansaugkrümmers kompatibel ist.

7. Ansaugkrümmer nach irgendeinem der Patentansprüche 1 bis 6, **dadurch gekennzeichnet, dass** die beiden miteinander in Berührung stehenden Ränder (6. 6') ebenfalls durch Werkstoffbrücken (12) direkt miteinander verbunden sind, die durch mindestens bestimmte der durchgehenden Öffnungen (8) verlaufen, die sich im Flansch (4) befinden.

8. Verfahren zur Herstellung eines mindestens einen Wärmetauscher umfassenden Verteilers oder Ansaugkrümmers nach irgendeinem der Patentansprüche 1 bis 7, **dadurch gekennzeichnet, dass** es darin besteht, einerseits zwei Bestandteile (5 und 5') eines Körpers (1') eines Verteilers oder Ansaugkrümmers (1), versehen mit peripheren Montagerändern (6 und 6') symmetrisch komplementärer Form und andererseits einen Wärmetauscher (2), der mindestens einen seitlichen Flansch (4) umfasst und eine Form und Abmessungen aufweist, die an eine Montage in einem Teil des Raumes angepasst sind, der durch die beiden Teile (5 und 5') im zusammengesetzten Zustand umgrenzt wird, bereitzustellen, die genannten Bestandteile (5 und 5') und den genannten Wärmetauscher (2) in einer Schweißvorrichtung oder -form anzuordnen, derart dass der oder die Flansch(e) (4) zwischen den einander gegenüber liegenden Montagerändern (6 und 6') der genannten Teile (5 und 5') angeordnet ist/sind, dann die Schweißung derart vorzunehmen, dass die genannten Ränder (6, 6') einerseits in einer Berührungszone (7) in Form eines peripheren, durchgehenden Streifens, der den Außenumfang des genannten Flansches (4) umgibt, durch Materialschluss dicht miteinander verbunden sind und andererseits lokal und nicht kontinuierlich mit dem genannten Flansch (4) durch Einstecken im Bereich durchgehender Öffnungen (8) und/oder verformter Bereiche oder in einem Absatz des letztgenannten mechanisch verbunden sind, und schließlich das zusammengesetzte Stück, das den Ansaugkrümmer (1) oder einen Teil des Ansaugkrümmers bildet, zu entnehmen und eventuell mindestens einem zusätzlichen Fertigungs- oder Endbearbeitungsschritt zu unterwerfen.

9. Herstellungsverfahren nach Patentanspruch 8, **dadurch gekennzeichnet, dass** die Schweißung eine Vibrationsschweißung ist, dass die beiden Bestandteile (5, 5') aus thermoplastischem Werkstoff bestehen, und jeder Montagerand (6, 6') vorzugsweise mit einem Absatz (11) versehen ist, der durch Zusammenwirken mit dem Absatz des gegenüberliegenden Randes (6, 6') mindestens eine Ausgangsform einer Aufnahmekehle (11') für den plattenförmigen Flansch (4) bildet.

10. Herstellungsverfahren nach irgendeinem der Patentansprüche 8 und 9, **dadurch gekennzeichnet, dass** es darin besteht, einen Wärmetauscher (2) mit einem dichten Außenmantel (9) bereitzustellen und einen peripher umgreifenden Flansch (4) in Form eines Flügels, der einstückig mit dem genannten Mantel (9) ausgebildet ist oder daran angesetzt und mit diesem dicht verbunden ist.

## Claims

1. Distributor or intake manifold for an internal combustion engine, in particular supercharged, said distributor incorporating at least one heat exchanger mounted in the interior space of said distributor while being made integral with the wall of the body of the distributor by at least one lateral flange, the body of the distributor being made of at least two constituent hollow parts joined to one another in an airtight manner at opposing peripheral edges and having a mutually corresponding configuration, with insertion of the flange of the exchanger, distributor (1) **characterised in that** its two constituent parts (5 and 5') are joined by physical bonding, preferably welding, of said opposing joining edges (6 and 6'), said edges (6, 6') being, on the one hand, connected physically to one another in an airtight manner, directly or indirectly, along a continuous peripheral contact area (7), surrounding the outer periphery of said flange (4), and, on the other hand, mechanically connected to said flange (4) by engagement or by being made integral at through openings (8) and/or at areas of hooking or of bonding with the latter.

2. Distributor or manifold according to Claim 1, **characterised in that** the or each flange (4) is a surrounding peripheral flange that extends over the entire lateral periphery of the exchanger (2), the through openings (8) being preferably distributed over the entire flange (4).

3. Distributor or manifold according to any one of Claims 1 and 2, **characterised in that** the flange(s) (4) each consist(s) of a wing of sheet metal added to or formed in one piece with an outer envelope (9) of the heat exchanger (2), said wing (4) being advantageously located near one of the ends, in the direction of flow (DE) of the gas stream, of the exchanger (2).

4. Distributor according to Claims 2 and 3, **characterised in that** the peripheral flange (4) is connected in an airtight manner to the outer envelope (9) of the exchanger (2) that delimits, in the normal direction of flow (DE) of the gas stream, a laterally airtight portion of passage in the distributor (1), the gap (10) between this envelope (9) and the wall of the body (1') of the distributor (1) being blocked by said peripheral flange (4) whose through openings (8) are all located between the edges (6, 6') joined by welding.

5. Distributor according to any one of Claims 1 to 4, **characterised in that** the two constituent parts (5, 5') entirely form the body (1') of the distributor (1) and are made of a thermoplastic material, these parts (5, 5') being joined by local fusing and heat welding of the material of the opposing edges (6, 6'), for example by vibration welding, with the formation of the contact area (7), and
**in that** each edge (6, 6') is provided with a radiused chamfer (11) that forms, by cooperation with the radiused chamfer of the opposing edge (6, 6'), at least one receiving throat blank (11') for the flange (4) in the shape of a plate.

6. Distributor according to any one of Claims 1 to 5, **characterised in that** the contact area (7) consists of an over-molding of the flange (4), with a material that is compatible with that of the parts (5, 5') that constitute the body (1') of the manifold.

7. Distributor according to any one of Claims 1 to 6, **characterised in that** the two edges (6, 6') that are mutually in contact are also connected directly to one another by bridges of material (12) that extend through at least some of the through openings (8) present in the flange (4).

8. Process for manufacturing a manifold or distributor that incorporates at least one heat exchanger according to any one of Claims 1 to 7, **characterised in that** it consists in supplying, on the one hand, two constituent parts (5 and 5') of a body (1') of a manifold or distributor (1) that are provided with peripheral joining edges (6 and 6') of complementary symmetrical configurations, and, on the other hand, a heat exchanger (2) comprising at least one side flange (4) and having a shape and dimensions suited for a mounting in a portion of the space delimited by the two parts (5 and 5') in the assembled state, in placing said constituent parts (5 and 5') and said exchanger (2) in a welding mold or template in such a way that the flange(s) (4) is (are) placed between the opposing joining edges (6 and 6') of said parts (5 and 5'), in then performing the welding operation in such a way that said edges (6, 6') are, on the one hand, connected physically to one another in an airtight manner along a contact area (7) in the shape of a peripheral continuous band, surrounding the outer periphery of said flange (4), and, on the other hand, connected mechanically, in a localized and discontinuous way, to said flange (4) by engagement at through openings (8) and/or at deformed or radius-chamfered areas of the latter, and, finally, in extracting the composite piece forming a distributor (1) or a distributor part, and optionally in subjecting it to at least one additional manufacturing or finishing operation.

9. Manufacturing process according to Claim 8, **characterised in that** the welding operation is a vibration welding operation, the two constituent parts (5, 5') being made of a thermoplastic material and each joining edge (6, 6') being preferably provided with a radiused chamfer (11) that forms, by cooperating with the radiused chamfer of the opposing edge (6, 6'), at least one receiving throat blank (11') for the flange (4) in the shape of a plate.

10. Manufacturing process according to any one of Claims 8 and 9, **characterised in** th it consists in supplying an exchanger (2) with an airtight outer envelope (9) and a surrounding peripheral flange (4) in the form of a wing made in one piece with or added to said envelope (9), and connected to the latter in an airtight manner.
